# EUROPÄISCHE PATENTSCHRIFT

(11) **EP 3 593 922 B1**
(45) Veröffentlichungstag und Bekanntmachung des Hinweises auf die Patenterteilung: **31.03.2021**
(21) Anmeldenummer: 19168459.6
(22) Anmeldetag: 10.04.2019
(51) Int. Cl.: B22D 2/00, G01F 1/708

(54) **GUSSFORMANORDNUNG MIT EINER MESSSEKTION ZUR DETEKTION DES FLIESSVERHALTENS VON METALL BEIM GIESSEN UND EIN VERFAHREN ZUR MESSUNG EINES FLIESSVERHALTENS EINER SCHMELZE IN EINER GUSSFORMANORDNUNG**
MOULD ASSEMBLY WITH A MEASUREMENT SECTION FOR DETECTING FLOW BEHAVIOUR OF METAL DURING CASTING AND A METHOD OF MEASURING A FLOW OF A MELT IN A MOULD ASSEMBLY
DISPOSITIF MOULE DOTÉ D'UNE SECTION DE MESURE PERMETTANT DE DÉTECTER LE COMPORTEMENT D'ÉCOULEMENT LORS DE LA COULÉE ET PROCÉDÉ DE MESURE DU COMPORTEMENT D'ÉCOULEMENT D'UNE MASSE FONDUE DANS UN SYSTÈME DE MOULE

(30) Priorität: 12.07.2018 DE 102018116952
(43) Veröffentlichungstag der Anmeldung: 15.01.2020
(73) Patentinhaber: Rheinmetall Air Defence AG, 8050 Zürich (CH)
(72) Erfinder: FONROBERT, Benno, 8046 Zürich (CH); FRICK, Henry Roger, 8442 Hettlingen (CH)
(74) Vertreter: Kirschner, Sebastian

(56) Entgegenhaltungen:
- EP-A2- 0 187 993
- DE-A1- 2 722 214
- US-A- 4 212 342

## Beschreibung

Die Erfindung betrifft eine Gussformanordnung und ein Verfahren zur Messung eines Fließverhaltens einer Schmelze in einer solchen Gussformanordnung mit den Merkmalen der unabhängigen Patentansprüche.

Die Erfindung betrifft insbesondere eine Gussformanordnung mit einer Gussform, wobei ein flüssiges Metall, die sogenannte Schmelze, in die als Hohlform ausgebildete Gussform gefüllt wird. In der Gussform erstarrt das Metall.

Ein Problem beim Gießen besteht darin, dass das Fließverhalten der Schmelze nicht gut kontrolliert werden kann.

Aus der DE 10 2008 050 509 A1 ist ein nichtinvasives Füllstanderfassungssystem und Regelungssystem für einen Sandgießvorgang bekannt. Das Füllstanderfassungssystem weist eine Treiberschaltung auf, die benachbart zu der Gussform angeordnet ist. Die Treiberschaltung ist als ein LC-Oszillator mit einem induktiven Bauteil ausgebildet. Das induktive Bauteil ist benachbart zu einer Außenwand der Gussform angeordnet und als eine C-förmige Einzelspule ausgebildet. Die Einzelspule weist einen Ferritkern mit einer Wicklung aus Magnetdraht auf. Mit der Spule wird ein Magnetfeld erzeugt, das sich bis in die Gussform hinein erstreckt. In der Schmelze werden dadurch Wirbelströme induziert, die dem von außen angelegten Magnetfeld entgegenwirken. Dies beeinflusst eine elektrische Eigenschaft der Spule. Um nun die Anwesenheit der Schmelze zu detektieren werden die elektrischen Eigenschaften der Spule gemessen bspw. eine Spannung, eine Frequenz, ein ohmscher Blindwiderstand und ein induktiver Blindwiderstand.

In der EP 0 187 993 A2 ist eine Vorrichtung zur Regelung einer Gieß- bzw. Fördereinrichtung beim Füllen einer Gussform mit Flüssigmetall offenbart. Die Regelung der Gieß- bzw. Fördereinrichtung beim Füllen der Gussform mit Flüssigmetall gewährleistet eine Regulierung einer Höhe eines Flüssigmetallspiegels im oberen Bereich einer Eingussöffnung der Gussform während des Füllvorganges und bewirkt eine Endabschaltung einer Flüssigmetallzufuhr in die Eingussöffnung bei gefüllter Gussform. Dazu werden Induktionsspulen vor dem Beginn des Füllvorganges um einen um die Eingussöffnung umlaufenden Kragen gelegt. Zu Beginn des Füllvorganges wird so viel Flüssigmetall zugeführt, dass der Flüssigmetallspiegel bis in den von den Induktionsspulen umgebenen Bereich ansteigt. Die Änderung der gegenseitigen Induktion der Induktionsspulen wird zur Regelung und Endabschaltung der Flüssigmetallzufuhr benutzt, wobei der Flüssigmetallspiegel in einem gewünschten Bereich bleibt. Der Kragen kann beispielsweise an die Gussform angeformt sein. Vorzugsweise wird ein Aufsatz, in welchem die Induktionsspulen angeordnet sind, in einer Nut auf der Oberseite der Gussform eingesetzt.

Die US 4,212,342 A zeigt ein Verfahren und eine Vorrichtung zum Regulieren eines Flüssigmetallspiegels einer Eingussöffnung einer Stranggussform mittels elektromagnetischer Wechselfelder. Die Induktivität der elektromagnetischen Wechselfelder ändert sich je nach Höhe des Flüssigmetallspiegels. Weiterhin wird die Höhe des Flüssigmetallspiegels anhand der gemessenen Induktivität reguliert. Es wird ein elektromagnetisches primäres Wechselfeld von der Seite der Stranggussform auf eine Formwand der Eingussöffnung gerichtet, wobei die Metallschmelze in die Eingussöffnung eingegossen wird. Dieses Wechselfeld induziert einen Strom in der Formwand und ein durch diesen Strom erzeugtes sekundäres elektromagnetisches Wechselfeld wird gemessen und als Eingangssignal zur Regelung des Flüssigmetallspiegels in der Stranggussform, insbesondere der Eingussöffnung der Stranggussform verwendet.

In der DE 27 22 214 A1 ist eine Anordnung zur elektromagnetischen Messung des Niveaus und/oder Abstandes für flüssiges, elektrisch leitendes Material dargestellt. Das Material z.B. geschmolzenes Metall ist in einem Behälter enthalten. Der Behälter ist in einem Torpedo- bzw. Blasenschöpfwagen angeordnet. Alternativ ist der Behälter Teil einer Vorrichtung zum kontinuierlichen Formgießen. Beim kontinuierliches Formgießen weist der Behälter eine innere Kupferschale auf. Eine Sendespule und eine Empfangsspule sind in den Behälter eingebaut. Mittels der Sendespule und der Empfangsspule ist das Niveau des geschmolzenen Metalls in dem Behälter messbar. Ebenso ist der Abstand der Sendespule bzw. der Empfangsspule zu dem geschmolzenen Metall messbar. Dieser Abstand liefert ein Maß für den Abrieb und die Erosion einer Wand des Behälters.

Der Erfindung liegt daher die Aufgabe zugrunde, die Kontrollmöglichkeiten des Fließverhaltens der Schmelze zu verbessern.

Diese der Erfindung zugrunde liegende Aufgabe wird nun durch eine Gussformanordnung und ein Verfahren mit den Merkmalen der unabhängigen Patentansprüche gelöst.

Die mindestens eine Messsektion ist innerhalb der Gussform angeordnet. Bei dem Verfahren wird die Messsektion innerhalb der Gussform angeordnet. Hierdurch ist kann präziser die An- oder Abwesenheit der Schmelze im Bereich der Messsektion erfasst werden. Das Fließverhalten ist genauer bestimmbar.

Die Gussformanordnung weist eine Gussform und mindestens eine Messsektion auf, wobei die Gussform einen mit einer Schmelze befüllbaren Hohlraum aufweist. Die Form des Hohlraums entspricht der Form des herzustellenden Werkstücks. Die mindestens eine Messsektion weist ein Sende- und ein Empfangsmittel auf, wobei durch das Sendemittel ein elektromagnetisches Feld erzeugbar ist, wobei das von dem Sendemittel erzeugte, und von der Schmelze beeinflusste, elektromagnetische Feld von dem Empfangsmittel empfangbar ist, wobei ein Maß für die Anwesenheit oder Abwesenheit der Schmelze im Bereich der mindestens einen Messsektion aufgrund der Änderung eines empfangenen Signals des Empfangsmittels bestimmbar ist.

Die Gussform weist vorzugsweise mindestens eine Aufnahme für die mindestens eine Messsektion auf, wobei die mindestens eine Messsektion innerhalb der mindestens einen Aufnahme angeordnet ist. Das Sende- und das Empfangsmittel sind bevorzugt in einem Hohlleiter angeordnet. Mittels einer Sendeeinheit ist ein elektrisches Signal erzeugbar, wobei das elektrische Signal an dem Sendemittel anlegbar ist.

Die Messsektion weist vorzugsweise ein Isolatormaterial auf, wobei das Sende-und das Empfangsmittel in das Isolatormaterial eingebettet sind. Das Sende-und das Empfangsmittel sind so vor der Hitzeeinwirkung der Schmelze geschützt. Eine preiswerte Ausgestaltung ergibt sich dadurch, dass das Isolatormaterial als Sand ausgebildet ist. Beispielsweise kann der Sand eine höchstens nur geringe Leitfähigkeit aufweisen.

Die mindestens eine Messsektion weist vorzugsweise eine Sendespule und eine Empfangsspule als Sende- und als Empfangsmittel auf. In alternativer Ausgestaltung kann genau eine Spule als Sende- und Empfangsspule dienen. Mittels der Sendespule ist ein elektromagnetisches Feld erzeugbar, wobei das von der Sendespule erzeugte, von der Schmelze beeinflusste, elektromagnetische Feld von der Empfangsspule empfangbar ist, wobei ein Maß für die Anwesenheit oder Abwesenheit der Schmelze im Bereich der mindestens einen Messsektion aufgrund der Änderung eines empfangenen Signals der Empfangsspule bestimmbar ist. Eine Trägerfrequenz des elektrischen Signals liegt unterhalb der kleinsten Grenzfrequenz des Hohlleiters. Es wird bestimmt, ob die Schmelze bereits die Messsektion erreicht hat oder noch nicht erreicht hat. Dies hat den Vorteil, dass beim Befüllen der Gussform kontrolliert werden kann, ob die Schmelze bereits die Position der Messsektion, d.h. der Empfangsspule erreicht hat.

Diese Gussformanordnung und das entsprechende Verfahren eignen sich insbesondere für die Kraftfahrzeugtechnologie, beispielsweise beim Gießen von Aluminium.

Die mindestens eine Messsektion ist vorzugsweise ringförmig ausgebildet und umgreift den Hohlraum, so dass beim Gießen der Schmelze die Schmelze eine Ringöffnung der Messsektion durchtritt. Beim Befüllen der Gussform fließt die Schmelze durch die mindestens eine Messsektion. Die Messsektion kann alternativ auch rechteckig mit einer rechteckigen Öffnung ausgebildet sein.

Die Schmelze weist bewegliche elektrische Ladungsträger auf, die das elektromagnetische Feld beim Durchtritt der Messsektion ändern. Dies führt zu einer Änderung des Empfangssignals an der Empfangsspule. Die Innenumfangsfläche der ringförmigen Messsektion kann den Hohlraum begrenzen und damit eine Grenzfläche für die Schmelze bereitstellen. Es ist denkbar, dass die Messsektion eine zylindrische Fläche des Hohlraums bzw. des Werkstücks begrenzt. Die Innenumfangsfläche kann jedoch auch eine andere Form als eine zylindrische Form aufweisen.

Es gibt nun verschiedene Möglichkeiten, einen Hohlleiter zu realisieren. Die Gussform kann aus einem elektrisch nichtleitenden oder gering leitenden Material, vorzugsweise Sand gebildet sein, wobei dann die Messsektion ein Messgehäuse aufweist, wobei das Messgehäuse den Hohlleiter bildet. Das Messgehäuse kann aus einem elektrisch leitenden Material gefertigt sein oder mit einem elektrisch leitenden Material beschichtet sein. Der Sandkern der Gussform ist insbesondere in einem elektrisch leitenden Rahmen oder einem Gehäuse angeordnet. Das Messgehäuse ist entsprechend hitzebeständig ausgebildet. Das Messgehäuse kann aus einer Wolfram-Kupfer-Legierung gefertigt sein, die einen höheren Schmelzpunkt als der Schmelzpunkt der Schmelze aufweist. Es ist denkbar, dass das Messgehäuse aus einer elektrisch leitenden Keramik gefertigt ist.

Das Messgehäuse ist vorzugsweise mehrteilig ausgebildet. Dies vereinfacht die Demontage vom Werkstück nachdem die Schmelze erkaltet ist. Das Messgehäuse ist mit verfestigtem bzw. gepresstem Sand gefüllt. In bevorzugter Ausgestaltung ist das Messgehäuse mehrteilig ausgeführt, so dass, nachdem die Schmelze erkaltet und gehärtet ist, die Messsektion durch Trennen der Teile des Messgehäuses vom Werkstück entfernt werden kann. Die Sendespule und die Empfangsspule weisen vorzugsweise nur eine Windung auf. Somit ist es einfach, beim Entfernen des Messgehäuses die Sendespule und die Empfangsspule mit einer Zange zu durchtrennen.

Das Messgehäuse kann sich nach innen bis zum Hohlraum erstrecken. Um alternativ einen Kontakt des Messgehäuses mit der Schmelze zu verhindern kann die Messsektion in Axialrichtung über das Messgehäuse vorstehende Nasen aus dem Isolatormaterial aufweisen. Der Sand ist vorzugsweise gefestigt, um eine stabile Form zu erreichen.

Das Messgehäuse weist vorzugsweise Anschlüsse auf, wobei die Sendespule und die Empfangsspule mit den elektrischen Anschlüssen verbunden sind. Die elektrischen Anschlüsse sind wiederum über elektrische Verbindungsleitungen mit einer Auswerteeinheit und mit einer Sendeeinheit verbunden. Die Empfangsspule ist mit einer Auswerteeinheit verbunden und die Sendespule ist mit einer Sendeeinheit verbunden.

In alternativer Ausgestaltung ist die Gussform aus einem elektrisch leitenden Material gebildet, wobei die Gussform den Hohlleiter bildet. Hierdurch kann auf ein separates Messgehäuse verzichtet werden.

Die Gussform weist eine Öffnung für eine elektrische Verbindung zwischen der Empfangsspule und einer Auswerteeinheit und/oder eine Öffnung für eine elektrische Verbindung zwischen der Sendespule und einer Sendeeinheit auf. Die Öffnung kann als Kanal in der Gussform ausgebildet sein. Pro Messsektion können hierbei ein oder zwei Öffnungen bzw. Kanäle vorhanden sein.

In bevorzugter Ausgestaltung sind mehrere, insbesondere zwei oder drei Messsektionen vorhanden, die beabstandet zueinander angeordnet sind. Hierdurch lässt sich eine Geschwindigkeitsmessung durchführen. Der Abstand der Messsektionen ist bekannt, wobei der Abstand der Empfangsspulen bekannt ist. Wenn nun die Zeit gemessen wird, die die Schmelze benötigt, um von der einen Messsektion zur anderen Messsektion zu gelangen, kann die Geschwindigkeit der Schmelze bestimmt werden. Wenn die Schmelze in den Bereich der Empfangsspulen gelangt, so wird hierdurch das elektromagnetische Feld beeinflusst, wodurch sich das gemessene Signal an den Empfangsspulen ändert. Die Messsektionen können insbesondere axial beabstandet zueinander angeordnet sein. Unter der Axialrichtung wird hier die Fließrichtung der Schmelze verstanden, die somit in axialer Richtung durch die Messsektionen fließt. Die Axialrichtung entspricht vorzugsweise der Längsrichtung des Hohlraums und damit der Längsrichtung des zu gießenden Werkstücks. Es sind somit mehrere beabstandete Messsektionen vorhanden, wobei die Zeit zwischen der Detektion der Schmelze in mindestens zwei Messsektionen gemessen wird, um die Geschwindigkeit der Schmelze zu bestimmen.

Dadurch dass die Trägerfrequenz des elektrischen Signals unterhalb der kleinsten Grenzfrequenz des Hohlleiters liegt, ist das erzeugte elektromagnetische Feld sehr stark örtlich konzentriert, und es kann im Hohlleiter keine Wellenausbreitung stattfinden. Lediglich ein vernachlässigbarer Anteil der elektromagnetischen Energie verlässt den Hohlleiter.

Es gibt eine Vielzahl von Möglichkeiten, die Gussformanordnung und das Verfahren auszugestalten und weiterzubilden. Es darf zunächst auf die dem Patentanspruch 1 nachgeordneten Patentansprüche verwiesen werden. Im Folgenden werden bevorzugte Ausgestaltungen der Erfindung anhand der Zeichnung und der dazugehörigen Beschreibung näher erläutert. In der Zeichnung zeigt:
- Fig.1a: in einer geschnittenen Darstellung eine elektrisch leitende Gussformanordnung mit mehreren Messsektionen,
- Fig. 1b: in einer längsgeschnittene Darstellung eine der Messsektionen aus Fig. 1a,
- Fig. 1c: in einer Frontalansicht die Messsektion aus Fig. 1b,
- Fig. 2a: in einer geschnittenen Darstellung eine aus Sand gebildete Gussform mit mehreren Messsektionen, wobei die Messsektionen ein als Hohlleiter dienendes Messgehäuse aufweisen,
- Fig. 2b: in einer längsgeschnittenen Darstellung eine der Messsektionen aus Fig. 2a,
- Fig. 2c: in einer Frontalansicht die Messsektion aus Fig. 2b,
- Fig. 3a: in einer längsgeschnittenen Darstellung eine weitere Ausgestaltung der Messsektion mit einem Messgehäuse und mit einer Nase,
- Fig. 3b: in einer Frontansicht die Messsektion aus Fig. 3a
- Fig. 4a: in einer längsgeschnittenen Darstellung eine Gussformanordnung, wobei eine gemeinsame Sendeeinheit für alle Sensoren vorhanden ist,
- Fig. 4b: ein einer längsgeschnittenen Darstellung eine Gussformanordnung, wobei separate Auswerteeinheiten für alle Messsektionen vorhanden sind, sowie
- Fig. 4c: in einem schematischen Spannungszeitdiagramm der Verlauf der Umhüllenden der Empfangssignale der unterschiedlichen Messsektionen.

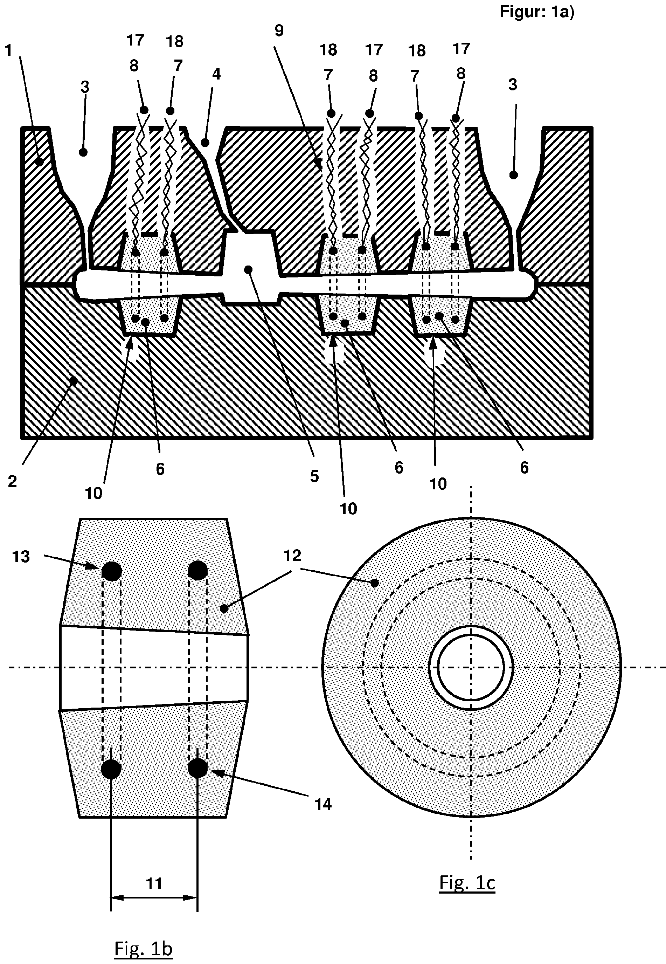

In Fig. 1a ist eine Gussformanordnung mit einer elektrisch leitenden Gussform 1, 2 dargestellt. Die Gussform 1, 2 ist mehrteilig ausgebildet und weist hier eine obere Hälfte 1 und eine untere Hälfte 2 auf. Die Gussform 1, 2 ist aus einem leitenden Material z.B. aus Stahl gefertigt worden. Die Gussform 1, 2 weist an der oberen Hälfte 1 mindestens eine Eingießöffnung 3 und mindestens einen Speiser 4 auf. Die beiden Hälften 1, 2 der Gussform 1, 2 begrenzen einen Hohlraum 5 für das Gießgut bzw. das Schmelzgut.

Die Gussformanordnung weist ferner mindestens eine, insbesondere mehrere Messsektionen 6 auf. Mittels der Messsektionen 6 ist der Fluss des Gießguts bzw. der Schmelze während des Gießens überprüfbar. Die Messsektionen 6 werden im Voraus hergestellt und in entsprechende Aufnahmen (nicht näher bezeichnet) in der Gussform 1, 2 angeordnet.

Die Messsektionen 6 weisen ein Sende- und ein Empfangsmittel 13, 14 auf, welche als eine Sendespule 13 und eine Empfangsspule 14 ausgeführt sind. Die Sendespule 13 und die Empfangsspule 14 sind vorzugsweise durch eine Windung, insbesondere eine Drahtwindung gebildet. Die Sendespule 13 und die Empfangsspule 14 sind innerhalb eines Isolatormaterials 12 (vgl. Fig. 1b und 1c) angeordnet. Das Isolatormaterial 12 ist insbesondere durch gepressten Sand gebildet, welcher eine vorzugsweise nur sehr niedrige elektrische Leitfähigkeit besitzt. Die Sendespule 13 und die Empfangsspule 14 sind dabei in einem axialen Abstand 11 zueinander angeordnet.

Die Messsektionen 6 sind hier im Wesentlichen ringförmig ausgebildet, wobei die nicht näher bezeichnete Ringöffnung einen Teil der Grenzfläche für die Schmelze bildet. Wenn nun die Schmelze in die Gussform 1, 2 gegossen wird, so tritt die Schmelze nacheinander durch die Messsektionen 6 hindurch. Beim Durchtritt durch die jeweilige Messsektion 6 wird die Schmelze detektiert.

Die Messsektionen 6 sind über elektrische Verbindungen 7, 8 mit einer Sendeeinheit 17 bzw. einer Auswerteeinheit 18 (nur stark schematisch dargestellt) verbunden. Die elektrische Verbindung 7 erstreckt sich zwischen der Empfangsspule 14 und der Auswerteeinheit 18. Die elektrische Verbindung 8 verbindet die Sendespule 13 mit der Sendeeinheit 17. Die Gussform 1, 2 weist im Wesentlichen radial erstreckende Öffnungen 9 zur Führung der elektrischen Verbindung 7, 8 auf. Die Hälften 1, 2 der Gussform 1, 2 bilden einen elektrischen Hohlleiter 10 der Messsektion 6. Damit sind die Sendespule 13 und die Empfangsspule 14 jeweils innerhalb eines Hohlleiters 10 angeordnet. In den Fig. 1. dargestellten Ausgestaltungen ist der Hohlleiter 10 als Teil der elektrisch leitenden Gussform 1, 2 ausgebildet.

An der Sendespule 13 liegt ein elektrisches Signal an, dessen Trägerfrequenz unterhalb der kleinsten Grenzfrequenz des Hohlleiters 10 liegt. Hierdurch wird ein stark örtlich konzentriertes, elektromagnetisches Feld erzeugt.

Mittels der Empfangsspule 14 wird nun das elektromagnetische Feld detektiert, wobei die Anwesenheit oder die Abwesenheit der Schmelze im Bereich des Hohlleiters 10, d.h. innerhalb der Messsektion 6 das Empfangssignal beeinflusst. Wenn nun die Schmelze im Bereich der Messsektion 6 eintritt, kann somit die Anwesenheit des Schmelzguts innerhalb der Messsektion 6 durch die Signaländerung detektiert werden. Dadurch, dass mehrere Messsektionen 6 hier axial beabstandet zueinander angeordnet sind, kann aus den Zeitpunkten, in dem die Schmelze jeweils in den Bereich der Messsektionen 6 eintritt, und dem Abstand der Messsektionen 6 eine Geschwindigkeit der Schmelze innerhalb der Gussform 1, 2 bestimmt werden. Das Fließverhalten des Schmelzgutes bzw. der Gießgutfluss ist somit besser kontrollierbar.

Es wird hier nicht eine Induktivitätsänderung und damit eine Resonanzfrequenzänderung gemessen, sondern die Empfangsspulen 14, welche von der Sendespule 13 getrennt sind, empfangen jeweils ein Signal mit einer Amplitudenänderung. Die Trägerfrequenz ist so gewählt, dass ein genügend hoher Pegel der induzierten Spannung in den Empfangsspulen erzeugt wird. Hierdurch kann es genügen, Empfangsspulen 14 und Sendespulen 13 mit nur einer Windung einzusetzen. Hierdurch sind die Herstellungskosten reduziert. Ferner hat diese Ausgestaltung auch bei der Demontage Vorteile, da hierbei jeweils nur eine Windung der Empfangsspulen 14 bzw. der Sendespulen 13 durchtrennt werden muss, um die Messsektion 6 von dem gegossenen Werkstück zu lösen.

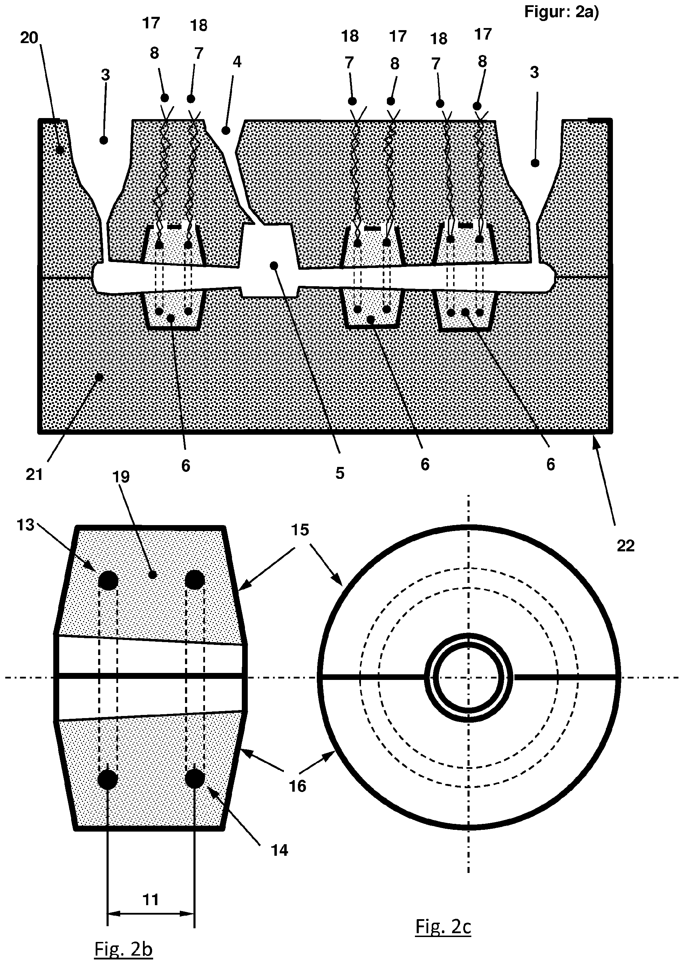

Im Folgenden darf auf die Fig. 2a bis 2c näher eingegangen werden. Hierbei wird der Hohlraum 5 für das Gießgut bzw. Schmelzgut durch gepressten Sand gebildet. Die Gussform besteht hier wiederum aus einer oberen Hälfte 20 und einer unteren Hälfte 21. Der Sand ist innerhalb eines Rahmens 22 angeordnet. Damit nun ein Hohlleiter 15, 16 für die Sendespule 13 und die jeweilige Empfangsspule 14 der Messsektion 6 bereitgestellt ist, weisen die Messsektionen 6 ein Messgehäuse auf, dass entweder aus einem leitenden Material gefertigt ist oder mit einem leitenden Material beschichtet ist. Das Messgehäuse besteht aus zwei Teilen, einer oberen Hälfe 15 und einer unteren Hälfte 16, welche vorzugsweise aus einem elektrisch leitenden Werkstoff jeweils bestehen oder alternativ mit einem leitenden Material beschichtet sind. Als Werkstoff kann ein Metall, insbesondere Stahl, oder eine leitende Keramik verwendet werden. Die Messgehäuse sind auch nach der Demontage wiederverwendbar.

Innerhalb des Messgehäuses ist ein Isolatormaterial 19 angeordnet, in das die Empfangsspule 14 und die Sendespule 13 eingebettet sind. Als Isolatormaterial kann gepresster Sand mit einer höchstens niedrigen elektrischen Leitfähigkeit verwendet werden. Nach der Demontage werden die Hälften 15, 16 gereinigt und können dann erneut mit der Sendespule 13, der Empfangsspule 14 und dem Isolatormaterial 19 bestückt werden.

Die Sendespule 13 und die Empfangsspule 14 sind innerhalb der Messsektion 6 koaxial, aber um einen Abstand 11 beabstandet angeordnet. Die Messsektionen 6 sind hier wiederum ringförmig ausgebildet. Die Innenumfangsfläche (nicht näher bezeichnet) des Isolators 19 bildet dabei eine Begrenzung des Hohlraums 5 für das Gießgut bzw. Schmelzgut.

In der in Fig. 2a und 2b dargestellten Ausgestaltung erstrecken sich hierbei die halbschalenförmigen Hälften 15, 16 des Hohlleiters bis im Wesentlichen zum Bereich des Hohlraumes 5. Die beiden Hälften 15, 16 sind durch die Drahtwindungen der Sendespule 13 bzw. der Empfangsspule 14 miteinander verbunden. Wenn nach dem Aushärten der Schmelze die Messsektion 6 vom Werkstück entfernt werden sollen, so werden hierbei die Drahtwindungen der Sendespule 13 bzw. der Empfangsspule 14 durchtrennt.

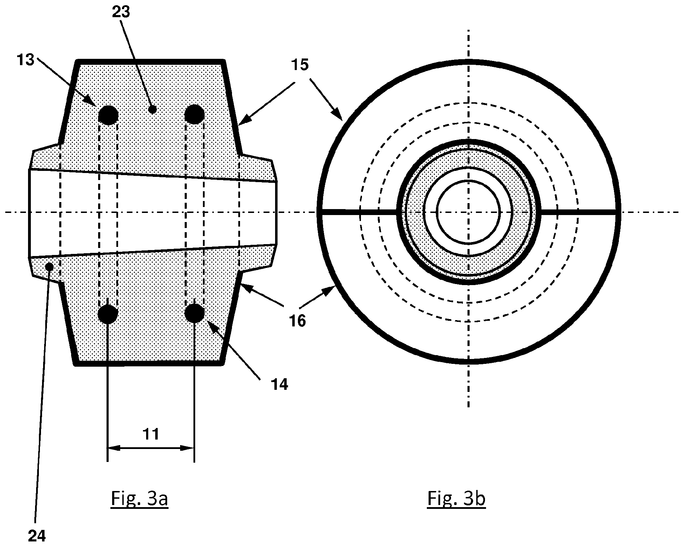

In Fig. 3a ist nun eine weitere Ausgestaltung der Messsektion 6 dargestellt. Auch hier weisen die Messsektionen 6 jeweils eine obere Hälfte und eine untere Hälfte des Messgehäuses auf, welches einen Hohlleiter für die Sendespule 13 und die Empfangsspule 14 bildet. Im Unterschied zu der in Fig. 2b und 2c dargestellten Ausgestaltung erstreckt sich hierbei der Hohlleiter 15, 16 in Radialrichtung nicht bis zum Hohlraum 5, sondern dieser wird durch eine axial über die inneren Kanten des Hohlleiters 15, 16 hervorstehenden Nasen 24 des Isolatormaterials 23 begrenzt. Das Isolatormaterial 23 ist hier mit den Nasen 24 ausgestattet, sodass das Gießgut bzw. Schmelzgut die Hohlleiterhälften 15, 16 nicht berührt.

Der Isolator 23 ist wieder aus gefestigtem speziellem Sand gebildet, welcher eine sehr niedrige elektrische Leitfähigkeit besitzt.

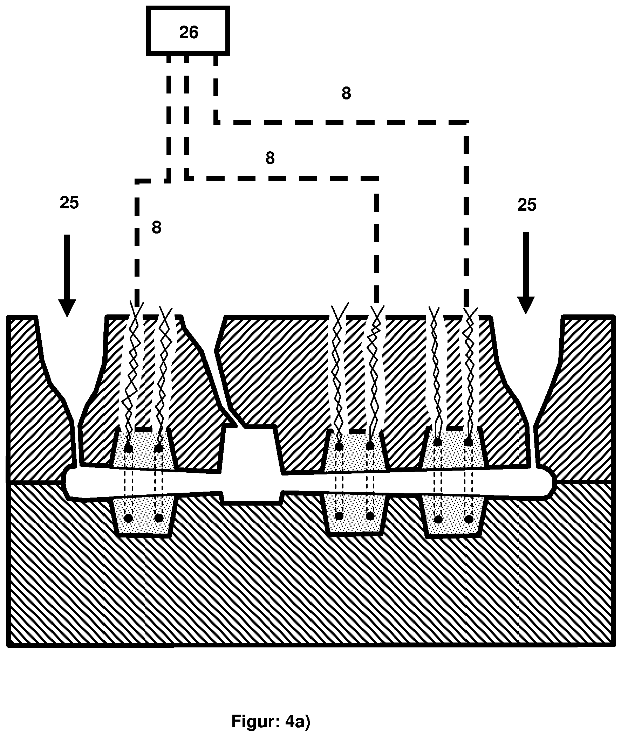

Im Folgenden darf auf die Ausgestaltung gemäß Fig. 4a näher eingegangen werden:
Die hier nicht näher bezeichnete Gussform und die Messsektion sind hier analog zur Ausgestaltung gemäß Fig. 1a ausgebildet. Durch die Pfeile 25 ist hier die Fließrichtung des Gießguts bzw. des Schmelzguts angedeutet. Über die elektrischen Verbindungen zwischen der Sendespule 13 und einer gemeinsamen Sendeeinheit 26 für alle Messsektionen 6 wird hier über die drei elektrischen Verbindungen 8 jeweils das gleiche Signal an die Sendespulen 13 übertragen.

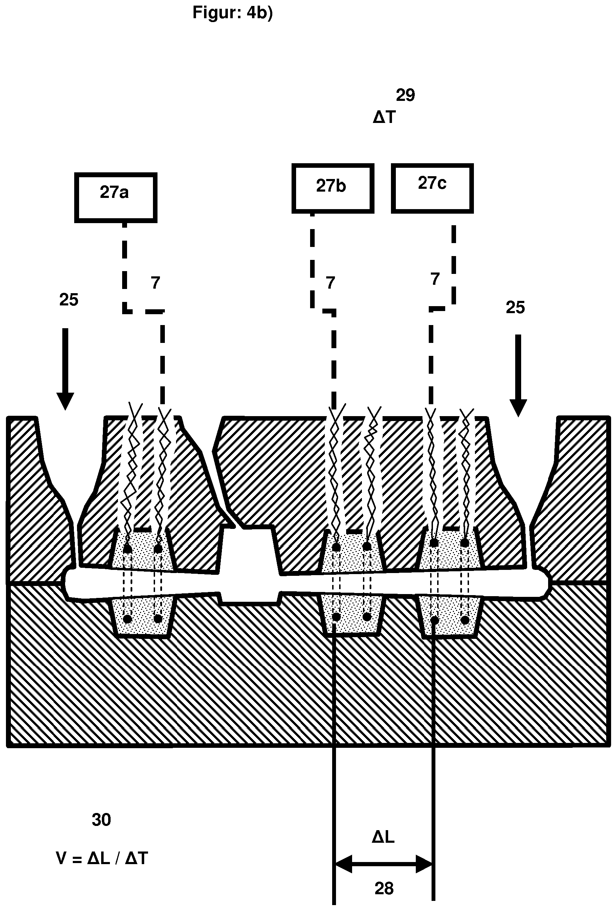

In der in Fig. 4b dargestellten Ausgestaltung sind nun drei separate, insbesondere baugleiche Auswerteeinheiten 27a, 27b, 27c dargestellt, die jeweils über eine eigene elektrische Verbindung 7 mit den Empfangsspulen 14 verbunden sind. Mit der Größe ΔL 28 ist die gegebene Distanz zwischen zwei Empfangsspulen bezeichnet. Mit ΔT 29 ist die gemessene Zeit zwischen zwei detektierter Signaländerungen zweier Messsektionen 6 mittels der beiden Auswerteeinheiten 27b und 27c bezeichnet. Die Fließgeschwindigkeit 30 bzw. V kann aus dem Verhältnis ΔL 28, d.h. der gegebenen Distanz und der gemessenen Zeit 29 bzw. ΔT bestimmt werden.

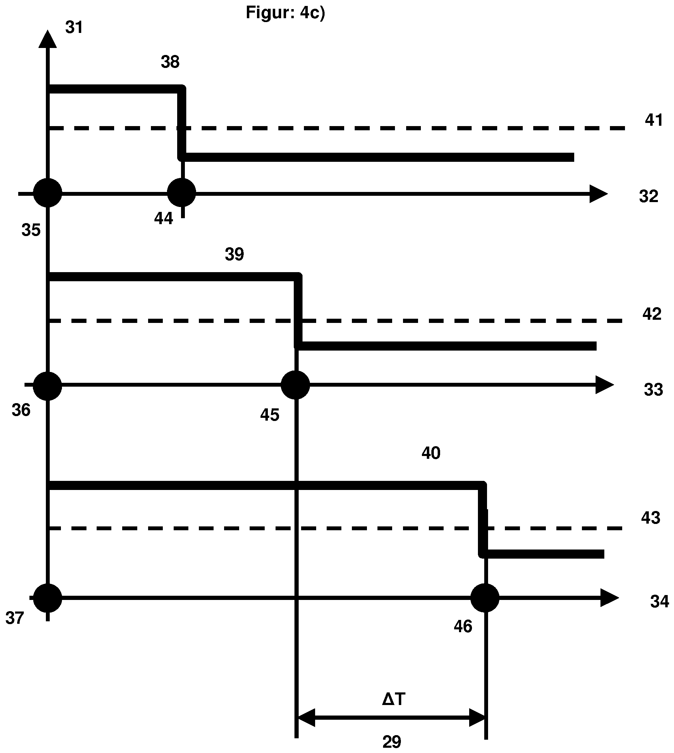

In Fig. 4c sind eine Spannungsachse 31 der Umhüllenden des Empfangssignals und drei Zeitachsen 32, 33, 34 dargestellt. Die Zeitachse 32 ist der Umhüllenden des Empfangssignals der Auswerteeinheit a) bzw. 27a zugeordnet. Die Zeitachse 33 ist der Umhüllenden des Empfangssignals der Auswerteeinheit b) bzw. 27b zugeordnet. Die Zeitachse 34 ist der Umhüllenden des Empfangssignals der Auswerteeinheit c) bzw. 27c zugeordnet. Mit den Bezugszeichen 35, 36, 37 sind jeweils die Zeitnullpunkte der jeweiligen Zeitachse 32, 33, 34 für das Empfangssignal der Auswerteeinheit 27a, 27b, 27c bezeichnet. Das Bezugszeichen 38 bezeichnet den Verlauf der Umhüllenden des Empfangssignals der Auswerteeinheit 27a. Das Bezugszeichen 39 bezeichnet den Verlauf der Umhüllenden des Empfangssignals der Auswerteeinheit 27b. Das Bezugszeichen 40 bezeichnet den Verlauf der Umhüllenden des Empfangssignals der Auswerteeinheit 27c. Es ist jeweils eine Entscheidungsschwelle 41, 42, 43 für den Durchtritt des Gießguts bzw. Schmelzguts für die Auswerteeinheit 27a, 27b, 27c gestrichelt dargestellt (vgl. Bezugszeichen 41, 42, 43). Wie nun gut zu erkennen ist, ändert sich der Verlauf der Umhüllenden 38 zum Zeitpunkt 44, an dem das Gießgut bzw. Schmelzgut durch die Messsektion 6 durchtritt, welche mit der Auswerteeinheit 27a verbunden ist. Zum späteren Zeitpunkt 45 tritt das Gießgut bzw. Schmelzgut durch die Messsektion 6, welche mit der Auswerteeinheit 27b verbunden ist. Um eine Zeit ΔT 29 nach dem Zeitpunkt 45 liegt der Zeitpunkt 46, an dem das Gießgut bzw. Schmelzgut durch die Messsektion 6 durchtritt, welche mit der Auswerteeinheit 27c verbunden ist. Wenn die Umhüllenden der Empfangssignale 38, 39, 40 die Entscheidungsschwellen 41, 42, 43 unterschreiten, so wird der Durchtritt des Schmelzguts bzw. Gießguts durch jeweilige die jeweilige Messsektion 6 detektiert. Hierdurch ist das Fließverhalten des Schmelzguts bzw. Gießguts besser kontrollierbar und es ist insbesondere die Fließgeschwindigkeit der Schmelze innerhalb der Gussform bestimmbar.

### Bezugszeichenliste:

- 1: Obere Hälfte der elektrisch leitenden Gussform
- 2: Untere Hälfte der elektrisch leitenden Gussform
- 3: Eingießöffnung (Einguss)
- 4: Speiser
- 5: Hohlraum für das Gießgut / Schmelzgut
- 6: Messsektion
- 7: Elektrische Verbindung zwischen Empfangsspule und Auswerteeinheit
- 8: Elektrische Verbindung zwischen Sendespule und Sendeeinheit
- 9: Öffnung in der Gussform für die elektrischen Verbindungen
- 10: Hohlleiter als Teil der elektrisch leitenden Gussform
- 11: Abstand zwischen Sende- und Empfangsspule
- 12: Isolatormaterial
- 13: Sendemittel / Sendespule
- 14: Empfangsmittel / Empfangsspule
- 15: Obere Hälfte des Hohlleiters
- 16: Untere Hälfte des Hohlleiters
- 17: Sendeeinheit (nicht dargestellt)
- 18: Auswerteeinheit (nicht dargestellt)
- 19: Isolatormaterial
- 20: Obere Hälfte der Gussform
- 21: Untere Hälfte der Gussform
- 22: Rahmen für die Gussform
- 23: Isolatormaterial mit Nasen, damit das Gießgut / Schmelzgut die Hohlleiterhälften 15, 16 nicht berührt
- 24: Nase
- 25: Fließrichtung des Gießguts / Schmelzguts
- 26: Gemeinsame Sendeeinheit für alle Sensoren
- 27a: Auswerteeinheit a)
- 27b: Auswerteeinheit b)
- 27c: Auswerteeinheit c)
- 28: ΔL: Gegebene Distanz zwischen zwei Empfangsspulen
- 29: ΔT: Gemessene Zeit zwischen zwei Signaländerungen in zwei Empfangseinheiten b) und c)
- 30: V = ΔL / ΔT: Berechnete der mittlere Fließgeschwindigkeit des Gießguts / Schmelzguts
- 31: Spannungs-Achse der Umhüllende des Empfangssignals
- 32: Zeitachse für die Umhüllende des Empfangssignals der Auswerteeinheit a)
- 33: Zeitachse für die Umhüllende des Empfangssignals der Auswerteeinheit b)
- 34: Zeitachse für die Umhüllende des Empfangssignals der Auswerteeinheit c)
- 35: Zeitnullpunkt der Zeitachse des Empfangssignals der Auswerteeinheit a)
- 36: Zeitnullpunkt der Zeitachse des Empfangssignals der Auswerteeinheit b)
- 37: Zeitnullpunkt der Zeitachse des Empfangssignals der Auswerteeinheit c)
- 38: Verlauf der Umhüllende des Empfangssignals der Auswerteeinheit a)
- 39: Verlauf der Umhüllende des Empfangssignals der Auswerteeinheit b)
- 40: Verlauf der Umhüllende des Empfangssignals der Auswerteeinheit c)
- 41: Entscheidungsschwelle für den Durchtritt des Gießguts / Schmelzguts für die Auswerteeinheit a)
- 42: Entscheidungsschwelle für den Durchtritt des Gießguts / Schmelzguts für die Auswerteeinheit b)
- 43: Entscheidungsschwelle für den Durchtritt des Gießguts / Schmelzguts für die Auswerteeinheit c)
- 44: Zeitpunkt für den Durchtritt des Gießguts / Schmelzguts durch die Messsektion, welche mit der Auswerteeinheit a) verbunden ist
- 45: Zeitpunkt für den Durchtritt des Gießguts / Schmelzguts durch die Messsektion, welche mit der Auswerteeinheit b) verbunden ist
- 46: Zeitpunkt für den Durchtritt des Gießguts / Schmelzguts durch die Messsektion, welche mit der Auswerteeinheit c) verbunden ist

## Patentansprüche

1. Gussformanordnung mit einer Gussform (1, 2, 20, 21) und mit mindestens einer Messsektion (6), wobei die Gussform (1, 2, 20, 21) einen mit einer Schmelze befüllbaren Hohlraum (5) aufweist, wobei die mindestens eine Messsektion (6) ein Sende-und ein Empfangsmittel (13, 14) aufweist, wobei durch das Sendemittel (13) ein elektromagnetisches Feld erzeugbar ist, wobei das von dem Sendemittel (13) erzeugte, und von der Schmelze beeinflusste, elektromagnetische Feld von dem Empfangsmittel (14) empfangbar ist, wobei ein Maß für die Anwesenheit oder Abwesenheit der Schmelze im Bereich der mindestens einen Messsektion (6) aufgrund der Änderung eines empfangenen Signals des Empfangsmittels (14) bestimmbar ist, **dadurch gekennzeichnet, dass** die mindestens eine Messsektion (6) innerhalb der Gussform (1, 2, 20, 21) angeordnet ist.

2. Gussformanordnung nach Anspruch 1, wobei die Gussform (1, 2, 20, 21) mindestens eine Aufnahme für die mindestens eine Messsektion (6) aufweist, wobei die Messsektion (6) innerhalb der Aufnahme angeordnet ist.

3. Gussformanordnung nach einem der vorstehenden Ansprüche, wobei das Sende-und das Empfangsmittel (13, 14) in einem Hohlleiter (10, 15, 16) angeordnet sind.

4. Gussformanordnung nach einem der vorstehenden Ansprüche, wobei die Messsektion (6) ein Isolatormaterial (12, 19, 23) aufweist, wobei das Sende-und das Empfangsmittel (13, 14) in das Isolatormaterial (12, 19, 23) eingebettet sind.

5. Gussformanordnung nach einem der vorstehenden Ansprüche, wobei mittels einer Sendeeinheit (17, 26) ein elektrisches Signal erzeugbar ist, wobei das elektrische Signal an dem Sendemittel (13) anlegbar ist.

6. Gussformanordnung nach einem der vorstehenden Ansprüche, wobei das Sende-und das Empfangsmittel (13, 14) als eine Sendespule (13) und eine Empfangsspule (14) ausgeführt sind.

7. Gussformanordnung nach Anspruch 6, wobei die Sendespule (13) und die Empfangsspule (14) zusammen durch genau eine Spule ausgeführt sind.

8. Gussformanordnung nach einem der vorstehenden Ansprüche, wobei die mindestens eine Messsektion (6) ringförmig ausgebildet ist und den Hohlraum (5) umgreift, so dass beim Gießen der Schmelze die Schmelze eine Ringöffnung der Messsektion (6) durchtritt.

9. Gussformanordnung nach einem der Ansprüche 6 bis 8, wobei die Empfangsspule (14) und/oder die Sendespule (13) nur eine Windung aufweisen.

10. Gussformanordnung nach einem der Ansprüche 4 bis 9, wobei das Isolatormaterial (12, 19, 23) als Sand ausgebildet ist.

11. Gussformanordnung nach einem der Ansprüche 3 bis 10, wobei die Gussform (20, 21) aus einem nichtleitenden Material, vorzugsweise Sand gebildet ist, wobei die Messsektion (6) ein Messgehäuse aufweist, wobei das Messgehäuse den Hohlleiter (15, 16) bildet.

12. Gussformanordnung nach Anspruch 11, wobei das Messgehäuse mehrteilig ausgebildet ist.

13. Gussformanordnung nach Anspruch 11 oder 12, wobei die Messsektion (6) in Axialrichtung über das Messgehäuse vorstehende Nasen (24) aus dem Isolatormaterial (12, 19, 23) aufweist.

14. Gussformanordnung nach einem der Ansprüche 3 bis 10, wobei die Gussform (1, 2) aus einem elektrisch leitenden Material gebildet ist, wobei die Gussform (1, 2) den Hohlleiter (10) bildet.

15. Gussformanordnung nach einem der Ansprüche 6 bis 14, wobei die Gussform (1, 2) eine Öffnung (9) für eine elektrische Verbindung (7, 8) zwischen der Empfangsspule (14) und einer Auswerteeinheit (18) und/oder eine Öffnung (9) für eine elektrische Verbindung (8) zwischen der Sendespule (13) und der Sendeeinheit (17) aufweist.

16. Verfahren zur Messung eines Fließverhaltens einer Schmelze in einer Gussformanordnung mit einer Gussform (1, 2, 20, 21), wobei in einen Hohlraum (5) der Gussform (1, 2, 20, 21) eine Schmelze eingefüllt wird, wobei mindestens eine Messsektion (6) ein Sende-und ein Empfangsmittel (13, 14) aufweist, wobei mittels des Sendemittels (13) ein elektromagnetisches Feld erzeugt wird, wobei das von dem Sendemittel (13) erzeugte, und von der Schmelze beeinflusste, elektromagnetische Feld von dem Empfangsmittel (14) empfangen wird, wobei ein Maß für die Anwesenheit oder Abwesenheit der Schmelze im Bereich der mindestens einen Messsektion (6) aufgrund der Änderung eines empfangenden Signals des Empfangsmittels (14) bestimmt wird, **dadurch gekennzeichnet, dass** die Messsektion (6) innerhalb der Gussform (1, 2, 20, 21) angeordnet wird.

17. Verfahren nach Anspruch 16, wobei mehrere beabstandete Messsektionen (6) vorhanden sind, wobei die Zeit zwischen der Detektion der Schmelze in mindestens zwei Messsektionen (6) gemessen wird

18. Verfahren nach einem der Ansprüche 16 bis 17, wobei eine Trägerfrequenz des elektrischen Signals unterhalb einer kleinsten Grenzfrequenz eines Hohlleiters (10, 15, 16) liegt.

## Claims

1. Mould assembly comprising a mould (1, 2, 20, 21) and comprising at least one measuring section (6), wherein the mould (1, 2, 20, 21) has a cavity (5) that can be filled with a melt, wherein the at least one measuring section (6) has a transmitting means (13) and a receiving means (14), wherein an electromagnetic field can be generated by the transmitting means (13), wherein the electromagnetic field generated by the transmitting means (13), and influenced by the melt, can be received by the receiving means (14), wherein a measure of the presence or absence of the melt in the region of the at least one measuring section (6) can be determined on the basis of the changing of a received signal of the receiving means (14), **characterized in that** the at least one measuring section (6) is arranged within the mould (1, 2, 20, 21).

2. Mould assembly according to Claim 1, wherein the mould (1, 2, 20, 21) has at least one receptacle for the at least one measuring section (6), wherein the measuring section (6) is arranged within the receptacle.

3. Mould assembly according to one of the preceding claims, wherein the transmitting means (13) and the receiving means (14) are arranged in a hollow conductor (10, 15, 16).

4. Mould assembly according to one of the preceding claims, wherein the measuring section (6) comprises an insulator material (12, 19, 23), wherein the transmitting means (13) and the receiving means (14) are embedded in the insulator material (12, 19, 23).

5. Mould assembly according to one of the preceding claims, wherein an electrical signal can be generated by means of a transmitting unit (17, 26), wherein the electrical signal can be applied to the transmitting means (13).

6. Mould assembly according to one of the preceding claims, wherein the transmitting means (13) and the receiving means (14) are formed as a transmitting coil (13) and a receiving coil (14).

7. Mould assembly according to Claim 6, wherein the transmitting coil (13) and the receiving coil (14) are together formed by just one coil.

8. Mould assembly according to one of the preceding claims, wherein the at least one measuring section (6) is designed in the form of a ring and reaches around the cavity (5), so that, during the pouring of the melt, the melt passes through an annular opening of the measuring section (6).

9. Mould assembly according to one of Claims 6 to 8, wherein the receiving coil (14) and/or the transmitting coil (13) have only one turn.

10. Mould assembly according to one of Claims 4 to 9, wherein the insulator material (12, 19, 23) takes the form of sand.

11. Mould assembly according to one of Claims 3 to 10, wherein the mould (20, 21) is formed from a nonconducting material, preferably sand, wherein the measuring section (6) has a measuring housing, wherein the measuring housing forms the hollow conductor (15, 16).

12. Mould assembly according to Claim 11, wherein the measuring housing is of a multipart form.

13. Mould assembly according to Claim 11 or 12, wherein the measuring section (6) has lugs (24) of the insulator material (12, 19, 23), projecting beyond the measuring housing in the axial direction.

14. Mould assembly according to one of Claims 3 to 10, wherein the mould (1, 2) is formed from an electrically conducting material, wherein the mould (1, 2) forms the hollow conductor (10).

15. Mould assembly according to one of Claims 6 to 14, wherein the mould (1, 2) has an opening (9) for an electrical connection (7, 8) between the receiving coil (14) and an evaluation unit (18) and/or an opening (9) for an electrical connection (8) between the transmitting coil (13) and the transmitting unit (17) .

16. Method for measuring a flow behaviour of a melt in a mould assembly comprising a mould (1, 2, 20, 21), wherein a melt is filled into a cavity (5) of the mould (1, 2, 20, 21), wherein at least one measuring section (6) has a transmitting means (13) and a receiving means (14), wherein an electromagnetic field is generated by means of the transmitting means (13), wherein the electromagnetic field generated by the transmitting means (13), and influenced by the melt, is received by the receiving means (14), wherein a measure of the presence or absence of the melt in the region of the at least one measuring section (6) is determined on the basis of the changing of a received signal of the receiving means (14), **characterized in that** the measuring section (6) is arranged within the mould (1, 2, 20, 21).

17. Method according to Claim 16, wherein there are a plurality of spaced-apart measuring sections (6), wherein the time between the detection of the melt in at least two measuring sections (6) is measured.

18. Method according to either of Claims 16 and 17, wherein a carrier frequency of the electrical signal lies below a smallest cut-off frequency of a hollow conductor (10, 15, 16).

## Revendications

1. Ensemble de moule de coulée comprenant un moule de coulée (1, 2, 20, 21) et au moins une section de mesure (6), le moule de coulée (1, 2, 20, 21) comportant une cavité (5) qui peut être remplie d'une matière en fusion, l'au moins une section de mesure (6) comportant un moyen d'émission et un moyen de réception (13, 14), un champ électromagnétique pouvant être généré par le moyen d'émission (13), le champ électromagnétique généré par le moyen d'émission (13) et influencé par la matière en fusion pouvant être reçu par le moyen de réception (14), une mesure de la présence ou de l'absence de la matière en fusion dans la zone de l'au moins une section de mesure (6) pouvant être déterminée sur la base de la variation d'un signal reçu du moyen de réception (14), **caractérisé en ce que** l'au moins une section de mesure (6) est disposée à l'intérieur du moule de coulée (1, 2, 20, 21).

2. Ensemble de moule de coulée selon la revendication 1, le moule de coulée (1, 2, 20, 21) comportant au moins un logement destiné à l'au moins une section de mesure (6), la section de mesure (6) étant disposée à l'intérieur du logement.

3. Ensemble de moule de coulée selon l'une des revendications précédentes, le moyen d'émission et le moyen de réception (13, 14) étant disposé dans un guide d'ondes (10, 15, 16).

4. Ensemble de moule de coulée selon l'une des revendications précédentes, la section de mesure (6) comprenant un matériau isolant (12, 19, 23), le moyen d'émission et le moyen de réception (13, 14) étant noyés dans le matériau isolant (12, 19, 23).

5. Ensemble de moule de coulée selon l'une des revendications précédentes, un signal électrique pouvant être généré à l'aide d'une unité d'émission (17, 26), le signal électrique pouvant être appliqué au moyen d'émission (13).

6. Ensemble de moule de coulée selon l'une des revendications précédentes, le moyen d'émission et le moyen de réception (13, 14) étant conçus comme une bobine d'émission (13) et une bobine de réception (14).

7. Ensemble de moule de coulée selon la revendication 6, la bobine d'émission (13) et la bobine de réception (14) étant réalisées conjointement par exactement une bobine.

8. Ensemble de moule de coulée selon l'une des revendications précédentes, l'au moins une section de mesure (6) étant de forme annulaire et s'engageant autour de la cavité (5) de sorte que, lorsque la matière en fusion est coulée, la matière en fusion passe par une ouverture annulaire de la section de mesure (6).

9. Ensemble de moule de coulée selon l'une des revendications 6 à 8, la bobine de réception (14) et/ou la bobine d'émission (13) n'ont qu'un enroulement.

10. Ensemble de moule de coulée selon l'une des revendications 4 à 9, le matériau isolant (12, 19, 23) étant formé par du sable.

11. Ensemble de moule de coulée selon l'une des revendications 3 à 10, le moule de coulée (20, 21) étant formé à partir d'un matériau non conducteur, de préférence du sable, la section de mesure (6) comportant un boîtier de mesure, le boîtier de mesure formant le guide d'ondes (15, 16).

12. Ensemble de moule de coulée selon la revendication 11, le boîtier de mesure étant conçu en plusieurs parties.

13. Ensemble de moule de coulée selon la revendication 11 ou 12, la section de mesure (6) ayant des ergots (24) en le matériau isolant (12, 19, 23) qui font saillie du boîtier de mesure dans la direction axiale.

14. Ensemble de moule de coulée selon l'une des revendications 3 à 10, le moule de coulée (1, 2) étant formé d'un matériau électriquement conducteur, le moule de coulée (1, 2) formant le guide d'ondes (10).

15. Ensemble de moule de coulée selon l'une des revendications 6 à 14, le moule de coulée (1, 2) comportant une ouverture (9) destinée à une liaison électrique (7, 8) entre la bobine de réception (14) et une unité d'évaluation (18) et/ou une ouverture (9) destinée à une liaison électrique (8) entre la bobine d'émission (13) et l'unité d'émission (17).

16. Procédé de mesure d'un comportement d'écoulement d'une matière en fusion dans un ensemble de moule de coulée comprenant un moule de coulée (1, 2, 20, 21), une matière en fusion étant versée dans une cavité (5) du moule de coulée (1, 2, 20, 21), au moins une section de mesure (6) comportant un moyen d'émission et un moyen de réception (13, 14), un champ électromagnétique étant généré à l'aide du moyen d'émission (13), le champ électromagnétique généré par le moyen d'émission (13) et influencé par la matière en fusion étant reçu par le moyen de réception (14), une mesure de la présence ou de l'absence de la matière en fusion dans la région de l'au moins une section de mesure (6) étant déterminée sur la base de la variation d'un signal reçu du moyen de réception (14), **caractérisé en ce que** la section de mesure (6) est disposée à l'intérieur du moule de coulée (1, 2, 20, 21).

17. Procédé selon la revendication 16, plusieurs sections de mesure (6) espacées étant prévues, le temps entre les détections de la matière en fusion dans au moins deux sections de mesure (6) étant mesuré.

18. Procédé selon l'une des revendications 16 et 17, la première fréquence porteuse du signal électrique étant inférieure à une fréquence de coupure la plus basse d'un guide d'ondes (10, 15, 16).
